# EUROPEAN PATENT APPLICATION

(11) **EP 4 635 580 A1**
(43) Date of publication of application: **22.10.2025**
(21) Application number: 23902593.5
(22) Date of filing: 08.12.2023
(51) Int. Cl.: A63B 21/072, A63B 71/00

(54) **COLLAPSIBLE BARBELL STAND**

(30) Priority: 15.12.2022 CN 202223375820 U
(71) Applicant: Decathlon, 59650 Villeneuve d'Ascq (FR)
(72) Inventor: ZHU, Xilong, Qingdao, Shandong 266000 (CN); GONG, Zhiwei, Qingdao, Shandong 266000 (CN); LI, Sigang, Qingdao, Shandong 266000 (CN)
(74) Representative: Sayettat, Julien Christian
(86) International application number: PCT/CN2023/137354
(87) International publication number: WO 2024/125397

(57) **Abstract**

Provided in the present application is a collapsible barbell stand, comprising: two bottom supporting rods, which are arranged in parallel; two column supports, which are respectively mounted on the two bottom supporting rods; two barbell brackets, which are respectively mounted at the tops of the two column supports; and a connecting base, which is located between the two bottom supporting rods, wherein two sides of the connecting base are connected to the two bottom supporting rods by means of two connecting rod assemblies, such that the connecting base and the bottom supporting rods form a parallelogram connecting rod mechanism by means of the connecting rod assemblies.

## Description

This application claims the benefit of priority to a Chinese patent application filed with the China Patent Office on December 15, 2022, with application number 202223375820.8 and titled "COLLAPSIBLE BARBELL STAND", the entire content of which is incorporated herein by reference.

### Technical Field

The present application belongs to the technical field of fitness equipment and, in particular, relates to a collapsible barbell stand.

### Background Art

Barbell stands are a type of fitness equipment mainly used for strength training such as deep squats and bench presses. Currently, commonly used barbell stands occupy a large area, have complex structures, are heavy in weight, and are expensive, thus they are only provided in professional gyms, and fitness enthusiasts who want to perform deep squat or bench press training can only go to the professional gyms. However, doing exercises in professional gyms is not only costly but also inconvenient in terms of transportation and time. To address this, some household barbell stands are provided. Although the volume and weight of the household barbell stands are reduced and their price are affordable for most fitness enthusiasts, the area of residential rooms is generally small, and these household barbell stands still occupy a large space when installed in rooms.

### Summary of the Invention

To address some of the shortcomings in the prior art, the present application provides a collapsible barbell stand to solve the problems of large occupied area and inconvenience in home use of existing barbell stands.

The collapsible barbell stand, comprising:
two bottom supporting rods, which are arranged in parallel;
two column supports, which are respectively mounted on the two bottom supporting rods;
two barbell brackets, which are respectively mounted at the tops of the two column supports;
a connecting base, which is located between the two bottom supporting rods, wherein two sides of the connecting base are connected to the two bottom supporting rods by means of two connecting rod assemblies, such that the connecting base and the bottom supporting rods form a parallelogram connecting rod mechanism by means of the connecting rod assemblies.

In one embodiment, each connecting rod assembly comprises two parallel connecting rods, namely a first connecting rod and a second connecting rod; each end of each connecting rod is hinged to the bottom supporting rod and the connecting base respectively.

In one embodiment, the collapsible barbell stand is configured such that when the first connecting rod is parallel to and abuts against the inner surface of the bottom supporting rod, the second connecting rod abuts against the surface of the first connecting rod.

In one embodiment, the first connecting rod and the second connecting rod are respectively hinged to a first mounting seat and a second mounting seat provided on the inner surface of the bottom supporting rod, wherein the second mounting seat protrudes inward more than the first mounting seat.

In one embodiment, the collapsible barbell stand is configured such that when the first connecting rod is parallel to the bottom supporting rod, the surface of the second connecting rod on the side away from the first connecting rod abuts against the surface of the second connecting rod of another connecting rod assembly.

In one embodiment, in the folded state, the collapsible barbell stand is configured such that the second connecting rod, the first connecting rod, and the bottom supporting rod are sequentially abutted from inside out, and the connecting base also abuts against the bottom supporting rod; the hinge point of the first connecting rod with the connecting base is closer to the bottom supporting rod than the hinge point of the second connecting rod with the connecting base.

In one embodiment, the connecting rod assembly is connected to the rear portion of the bottom supporting rod.

In one embodiment, the connecting rod assembly further includes an elastic latch mechanism mounted on the connecting rod; when the connecting rod is perpendicular to the bottom supporting rod, the elastic latch mechanism is inserted into a socket provided in the connecting base.

In one embodiment, the elastic latch mechanism has a first latch pin and a first sleeve; the first sleeve is mounted on the connecting rod; the first latch pin is slidably located within the first sleeve; a first end of the first latch pin extends out of the first sleeve for being operated by hand; a second end of the first latch pin, opposite to the first end, extends out of the first sleeve and can be inserted into a socket of the connecting base; a first spring is sleeved on the first latch pin and located within the first sleeve.

In one embodiment, the diameter of the opening of the first sleeve near the first end of the first latch pin is smaller than the diameter of the first spring; a first boss is provided at the second end of the first latch pin, and the first spring is confined between the opening of the first sleeve and the first boss.

In another embodiment, the connecting base has an arc-shaped sliding hole with limit end holes at both ends; the elastic latch mechanism has a second latch pin and a second sleeve; the second sleeve is mounted on the connecting rod; the second latch pin is slidably located within the second sleeve; a first end of the second latch pin extends out of the second sleeve for being operated by hand; a second end of the second latch pin, opposite to the first end, extends out of the second sleeve through an opening of the second sleeve and can be inserted into the sliding hole of the connecting base; the movement direction of the second latch pin is consistent with the extension direction of the arc-shaped sliding hole; a second boss is provided between the first end and the second end of the second latch pin and located within the second sleeve; a second spring is sleeved on the second latch pin and provided between the second boss and the opening of the second sleeve; a limit sleeve is provided at the second end of the second latch pin to limit the second latch pin at each limit end hole; the limit sleeve and the second sleeve are respectively located on opposite sides of the sliding hole.

In one embodiment, the first end of the limit sleeve near the sliding hole has a size larger than the sliding hole and smaller than the limit end hole, and can be engaged in the limit end hole; the second end of the limit sleeve away from the sliding hole has a size larger than the limit end hole. The elastic latch mechanism further has a screw sleeve through which the first end of the second latch pin passes, the screw sleeve is connected to the second sleeve, and the inner diameter of the screw sleeve is larger than the diameter of the second latch pin and smaller than the diameter of the second boss to confine the second boss within the second sleeve.

In one embodiment, a synchronous gear is mounted at the end of each second connecting rod that is connected to the connecting base, and the synchronous gears of the two second connecting rods mesh with each other to make the connecting rods of the two connecting rod assemblies simultaneously perpendicular to the corresponding bottom supporting rods.

In one embodiment, the connecting base has a limit post configured to abut against a side surface of the connecting rod when the connecting rod swings to be perpendicular to the bottom supporting rod, thereby preventing the connecting rod from further swinging.

In one embodiment, the column support comprises:
a column with a bottom fixedly connected to the bottom supporting rod and a top provided with a limit hole;
an adjustment column inserted into the column to be movable up and down; the barbell bracket is mounted at the top of the adjustment column, and multiple adjustment holes are spaced along the adjustment column;
a stop pin that can pass through the limit hole and the adjustment hole to fix the adjustment column.

At least one embodiment of the present application provides a collapsible barbell stand in which the connecting base is connected to the two bottom supporting rods via connecting rod assemblies, allowing the two bottom supporting rods to move toward each other as the connecting rod assemblies swing, reducing the distance between them. Additionally, the parallelogram connecting rod mechanism formed by the connecting rod assemblies keeps the two bottom supporting rods moving toward each other in parallel, minimizing the distance between them and finally folding the barbell stand into a smaller volume, eliminating significant occupation of home space, meeting the storage needs of home use, and being convenient to unfold and fold, thus solving the problems of large occupied area and inconvenience in home use of current barbell stands.

### Brief Description of the Drawings

FIG. 1 is a schematic diagram of a collapsible barbell stand according to one embodiment in an unfolded state;
FIG. 2 is an enlarged view of the portion A in FIG. 1;
FIG. 3 is a schematic diagram of the barbell stand during the transition from the unfolded state to the folded state;
FIG. 4 is a schematic diagram of the barbell stand in the folded state;
FIG. 5 is a cross-sectional view of an elastic latch mechanism according to one embodiment;
FIG. 6 is an exploded view of an elastic latch mechanism according to another embodiment;
FIG. 7 is a cross-sectional view of the elastic latch mechanism corresponding to FIG. 6.

In the figures: 1 bottom supporting rod, 11 first mounting seat, 12 second mounting seat; 2 column support, 21 column, 22 adjustment column, 23 stop pin, 24 limit hole, 25 adjustment hole; 3 barbell bracket; 4 connecting base, 41 socket, 42 limit post, 43 sliding hole, 44 limit end hole; 5 connecting rod assembly, 51 first connecting rod, 52 second connecting rod, 53 elastic latch mechanism, 531 first latch pin, 5311 first end of first latch pin, 5312 second end of first latch pin, 5313 first boss, 532 first sleeve, 5321 opening of first sleeve, 533 first spring, 534 first latch cap, 535 second latch pin, 5351 first end of second latch pin, 5352 second end of second latch pin, 536 second sleeve, 5361 opening of second sleeve, 537 second boss, 538 screw sleeve, 539 second spring, 540 limit sleeve, 5401 first end of limit sleeve, 5402 second end of limit sleeve; 541 second latch cap, 542 gap, 54 synchronous gear.

### Detailed Description of Embodiments

The technical solutions of the present application are described in detail below in conjunction with specific embodiments, but it should be understood that elements, structures, and features in one embodiment can be beneficially combined into other embodiments without further recitation.

In the description of the present application, it should be understood that the terms "first" and "second" are used for descriptive purposes only and should not be construed as indicating or implying relative importance or implicitly specifying the quantity of indicated technical features. Thus, features defined with "first" and "second" may explicitly or implicitly include one or more of these features.

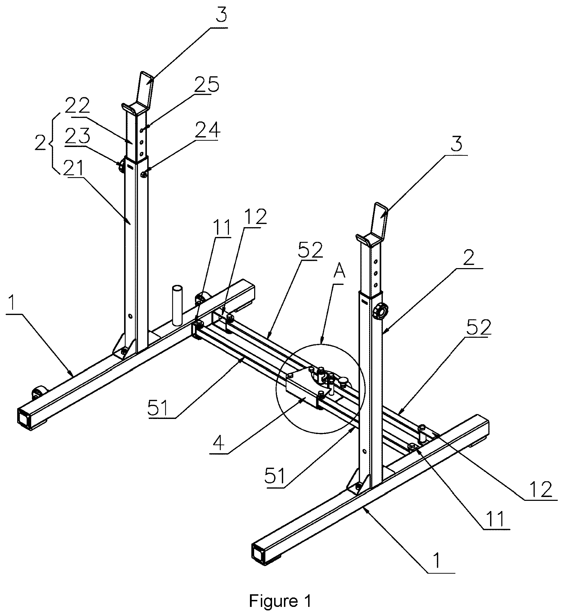

In the description of the present application, it should be understood that the positional or orientational relationships indicated by terms such as "upper," "lower," "front," "rear," "left," and "right" are based on the positional or orientational relationships shown in FIG. 1, merely for convenience in describing the present application and simplifying the description, and do not indicate or imply that the referred device or element must have a specific orientation, be constructed or operate in a specific orientation, and thus should not be construed as a limitation on the present application. Additionally, relatively, in FIGS. 1-4, the side close to the connecting base 4 is the "inner" side, and the side close to the bottom supporting rod 1 is the "outer" side; the opening direction of the barbell bracket 3 is the "front" side, and the opposite direction is the "rear" side.

In the description of the present application, it should be noted that unless explicitly specified and limited otherwise, the term "connected" should be interpreted broadly, such as being a fixed connection, a detachable connection, or an integral connection; it can be a direct connection or an indirect connection via an intermediate medium, and can be an internal communication between two elements. For those of skilled skill in the art, the specific meaning of the above terms in the present application can be understood according to specific circumstances.

As shown in FIGS. 1 to 4, an embodiment of the present application provides a collapsible barbell stand (referred to as the barbell stand for short), including bottom supporting rods 1, column supports 2, barbell brackets 3, and a connecting base 4.

There are two bottom supporting rods 1, arranged in parallel; they are generally placed to the ground parallel to each other. There are two column supports 2, vertically mounted on the two bottom supporting rods 1 respectively. There are two barbell brackets 3, mounted at the tops of the two column supports 2 respectively. The connecting base 4 is located between the two bottom supporting rods 1. The first side of the connecting base 4 is connected to one bottom supporting rod 1 via a connecting rod assembly 5, and the second side opposite to the first side is connected to the other bottom supporting rod 1 via another connecting rod assembly 5. The connecting base 4, the bottom supporting rod 1 on the first side, and the connecting rod assembly 5 therebetween form a parallelogram connecting rod mechanism, and the connecting base 4, the bottom supporting rod 1 on the second side, and the connecting rod assembly 5 therebetween also form a parallelogram connecting rod mechanism. In short, either side of the connecting base 4 is rotatably connected to each bottom supporting rod 1 via a connecting rod assembly, and the connecting base 4 and any one of the bottom supporting rods 1 and the connecting rod assembly therebetween form a parallelogram connecting rod mechanism. The distance between the bottom supporting rod 1 and the connecting base 4 can be adjusted by swinging the connecting rod assembly 5, thereby adjusting the distance between the two bottom supporting rods 1.

The two bottom supporting rods 1, two column supports 2, two barbell brackets 3, and two connecting rod assemblies 5 are arranged approximately symmetrically with respect to the connecting base 4.

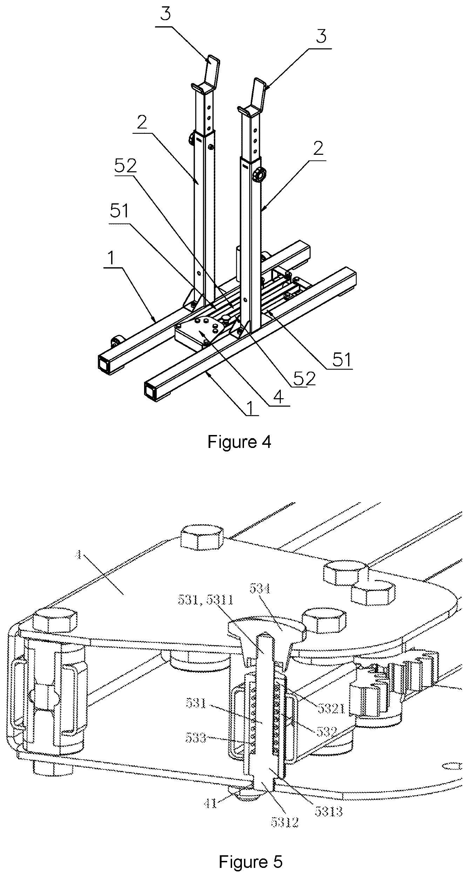

As shown in FIG. 1, during fitness use, the connecting rod assemblies 5 are swung to a state perpendicular to the bottom supporting rods 1, thereby adjusting the distance between the two bottom supporting rods 1 (or the two column supports 2) to the maximum; both ends of a barbell are placed on the corresponding barbell brackets 3, so that the barbell stand fixes and supports the barbell at a certain height, allowing a user to stand in the space between the two bottom supporting rods 1 for deep squat training or place a bench press bench in the space between the two bottom supporting rods 1 for bench press training. As shown in FIG. 4, after fitness, the two bottom supporting rods 1 are brought together by swinging the connecting rod assemblies 5, thereby folding the barbell stand into a state with a small volume for storage, avoiding significant occupation of room space.

In the above embodiment, the connecting base 4 of the collapsible barbell stand is connected to the bottom supporting rods 1 via the connecting rod assemblies 5, and swinging the connecting rod assemblies 5 can change the distance between the connecting base 4 and the bottom supporting rods 1, thereby adjusting the distance between the two bottom supporting rods 1. The two bottom supporting rods 1 are unfolded before fitness to ensure there is a distance between the barbell brackets 3 and enable the barbell stand to fully support the barbell. After fitness, the two bottom supporting rods 1 are brought together to fold the barbell stand into a state with a small volume, avoiding significant occupation of home space, meeting the storage needs of home use, and being convenient to unfold and fold, thus solving the problems of large footprint and inconvenience in home use of current barbell stands. Additionally, the formed parallelogram connecting rod mechanism keeps the two approaching bottom supporting rods 1 parallel with each other, minimizing the width of the overall barbell stand after folding, ensuring storage convenience, and the parallelogram connecting rod mechanism is stable, ensuring the stability of the barbell stand while achieving the folding.

In a specific embodiment, each connecting rod assembly 5 includes two parallel connecting rods, namely a first connecting rod 51 and a second connecting rod 52; both ends of each connecting rod are hinged to the bottom supporting rod 1 and the connecting base 4, allowing each connecting rod to swing relative to the bottom supporting rod 1, thereby enabling the connecting base 4 to approach or move away from the bottom supporting rod 1, and finally allowing the two bottom supporting rods 1 to approach or move away from each other to adjust the distance between them. The two connecting rods 51, 52, the connecting base 4, and the bottom supporting rod 1 form said parallelogram connecting rod mechanism, keeping the bottom supporting rods 1 and the connecting base 4 parallel, thereby keeping the two bottom supporting rods 1 parallel.

As shown in FIG. 4, after storage, when the first connecting rod 51 is parallel to and abuts against the inner surface of the bottom supporting rod 1, the second connecting rod 52 abuts against the surface of the first connecting rod 51, thereby maximizing the folding of the connecting rod assembly 5, allowing the connecting base 4 to approach the bottom supporting rod 1 as much as possible, finally minimizing the distance between the two bottom supporting rods 1, resulting in a smaller width and less volume occupation of the folded barbell stand, and being more convenient for storage.

The first connecting rod 51 and the second connecting rod 52 are respectively hinged to a first mounting seat 11 and a second mounting seat 12 provided on the inner surface of the bottom supporting rod 1. The two mounting seats can be arranged along the extension direction of the bottom supporting rod 1; further, the first mounting seat 11 is closer to the column support 2 than the second mounting seat 12, as shown in FIG. 1. The second mounting seat 12 protrudes more inward than the first mounting seat 11, so that the hinge point between the second connecting rod 52 and the second mounting seat 12 is closer to the inner side (closer to the connecting base 4) than the hinge point between the first connecting rod 51 and the first mounting seat 11, allowing the second connecting rod 52 and the first connecting rod 51 to be arranged adjacent to each other. Further, the distance by which the second mounting seat 12 protrudes inward relative to the first mounting seat 11 matches the size of the first mounting seat 11 and the widths of the first connecting rod 51 and the second connecting rod 52, so that after folding, the outer surface of the second connecting rod 52 can abut against the inner surface of the first connecting rod 51, and the first connecting rod 51 can tightly abut to the inner side of the bottom supporting rod 1, achieving the minimum folding of the connecting rod assembly.

As shown in FIG. 4, when the first connecting rod 51 is parallel to and abuts against the inner surface of the bottom supporting rod 1, the surface of the second connecting rod 52 on the side away from the first connecting rod 51 abuts against the surface of the second connecting rod 52 of another connecting rod assembly 5, so that the two connecting rod assemblies 5 closely abut against each other with almost no gap between them. This minimizes the distance between the two bottom supporting rods in the folded state, making the width of the folded barbell stand small and facilitating storage. In this folded state, the bottom supporting rod 1, the connecting rod assembly 5, and the connecting base 4 are almost close to the ground, and are arranged in the following order: supporting rod - first connecting rod - second connecting rod - second connecting rod - first connecting rod - bottom supporting rod.

As shown in FIGS. 1-4, the connecting rod assembly 5 is connected to the rear portion of the bottom supporting rod 1, so that the two bottom supporting rods 1 can be brought together by the forward swinging of the connecting rod assembly 5. When the barbell stand is in the folded state, the connecting rod assembly 5 can overlap with the bottom supporting rod 1 as much as possible in the front-back direction, reducing or even eliminating the protrusion of the connecting rod assembly 5 forward or backward from the bottom supporting rod 1, thereby reducing the length space occupation of the barbell stand in the folded state, further reducing the folded volume, and increasing storage convenience.

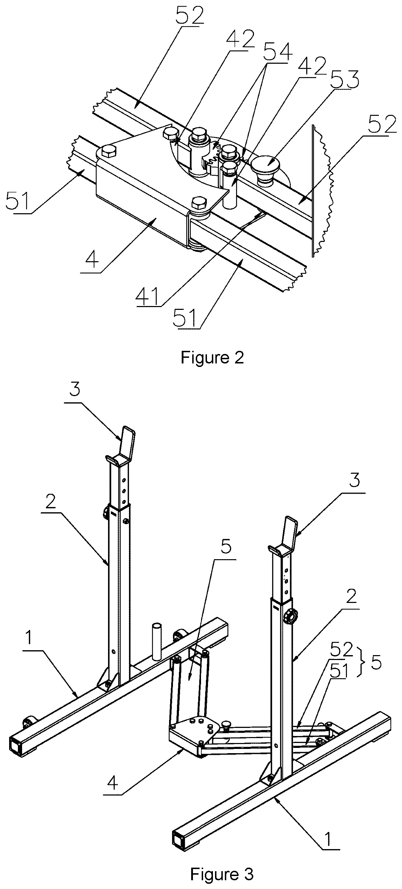

The connecting rod assembly 5 may further include a latch mechanism that can be inserted between the connecting rod and the connecting base 4 to fix the connecting rod assembly 5. The latch mechanism may be an elastic latch mechanism 53, which is mounted on the connecting rod. As shown in FIG. 2, the elastic latch mechanism 53 is provided on the second connecting rod 52 of the connecting rod assembly 5. When the connecting rod is perpendicular to the bottom supporting rod 1, the distance between the two bottom supporting rods 1 is maximized, and the barbell stand is in the unfolded state. The elastic latch mechanism 53 is inserted into the socket 41 provided in the connecting base 4 to fix the connecting rod and prevent it from swinging, thereby locking the barbell stand in the unfolded state, preventing deformation of the barbell stand during use, and ensuring safety.

In a specific embodiment, as shown in FIG. 5, the elastic latch mechanism 53 has a first latch pin 531 and a first sleeve 532; wherein, the first sleeve 532 is fixed on the connecting rod (e.g., welded or fixed to the connecting rods 51, 52 via screw); the first latch pin 531 is slidably disposed within the first sleeve 532; a first end 5311 of the first latch pin extends out of the first sleeve 532 for being operated by hand; a second end 5312 of the first latch pin 531, opposite to the first end, extends out of the first sleeve 532 and can be inserted into the socket 41 of the connecting base 4. A first spring 533 is sleeved on the first latch pin 531 and located within the first sleeve 532. In one embodiment, the diameter of the opening 5321 of the first sleeve 532 near the first end 5311 of the first latch pin is smaller than the diameter of the first spring 533, and a first boss 5313 is provided at the second end 5312 of the first latch pin, such that the first spring 533 is confined between the opening 5321 of the first sleeve 532 and the first boss 5313. Additionally, the first end 5311 of the first latch pin 531 may be provided with a first latch cap 534, which has a larger diameter than the first latch pin 531 for easier operation by hand. When intending to rotate the connecting rod assembly 5, the first latch cap 534 and the first latch pin 531 are lifted upward, causing the second end 5312 of the first latch pin to disengage from the socket 41 of the connecting base 4, and the first spring 533 is compressed upward at same time, allowing the connecting rod assembly 5 to rotate within a certain range. When intending to fix the connecting rod assembly 5, the connecting rod is rotated such that the second end 5312 of the first latch pin aligns with the socket 41 of the connecting base 4, and it automatically moves downward under the restoring force of the first spring 533. In one embodiment, the connecting base 4 is provided with at least two sockets 41, for respectively limiting the fully unfolded state and the fully folded state of the connecting rod assembly 5, thereby limiting the opening and storage of the barbell stand. Furthermore, along the path from the fully unfolded state to the fully folded state, the connecting base 4 may also be provided with multiple sockets 41 to limit the connecting rod assembly 5 in different states, so that the distance between the two bottom supporting rods 1 can be adjusted to accommodate barbell of different specifications.

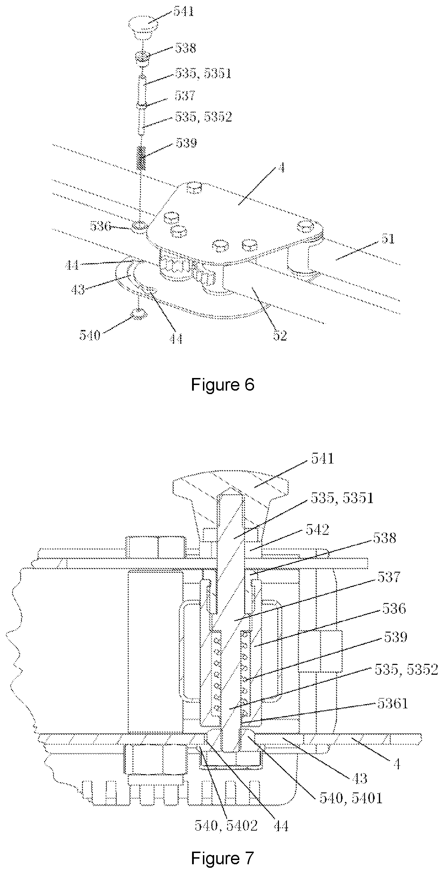

In an alternative embodiment, as shown in FIG. 6, the connecting base 4 is provided with an arc-shaped sliding hole 43 with the same extension direction as the movement direction of the elastic latch mechanism 53. Both sides of the sliding hole 43 are respectively provided with enlarged limit end holes 44 communicating with the sliding hole 43. As shown in FIGS. 6 and 7, the elastic latch mechanism 53 in this embodiment has a second latch pin 535 and a second sleeve 536; the second sleeve 536 is fixed on the connecting rod (e.g., welded or fixed to the connecting rods 51, 52 via screw); the second latch pin 535 is slidably disposed within the second sleeve 536. A first end 5351 of the second latch pin 535 extends out of the second sleeve 536 for being operated by hand; a second end 5352 of the second latch pin 535, opposite to the first end, extends out of the second sleeve 536, can be inserted into the sliding hole 43 of the connecting base 4, and can move along the sliding hole 43. A second boss 537 with an enlarged diameter is provided between the first end 5351 and the second end 5352 of the second latch pin. The elastic latch mechanism 53 further has a screw sleeve 538 through which the first end 5351 of the second latch pin passes. The screw sleeve 538 is connected to the second sleeve 536, for example, the screw sleeve 538 is provided with external threads, and the second sleeve 536 is provided with internal threads near the first end 5351 of the second latch pin, so that the screw sleeve 538 and the second sleeve 536 are threadedly connected through the matching of internal and external threads. The inner diameter of the screw sleeve 538 is larger than the diameter of the second latch pin 535 (the first end 5351 of the second latch pin) and smaller than the diameter of the second boss 537, so as to confine the second boss 537 within the second sleeve 536. An opening 5361 is provided at the second sleeve 536 near the second end 5352 of the second latch pin for the second end 5352 of the second latch pin to extend out. A second spring 539 sleeved on the second latch pin 535 is provided between the second boss 537 and the opening 5361 of the second sleeve 536, and its diameter is larger than the diameter of the opening 5361 of the second sleeve, so as to be confined within the second sleeve 536. A limit sleeve 540 is further provided at the second end 5352 of the second latch pin, and the limit sleeve 540 and the second sleeve 536 are respectively located on opposite sides of the sliding hole 43; as shown in FIGS. 6 and 7, the second sleeve 536 is located above the sliding hole 43, and the limit sleeve 540 is located below the sliding hole. As shown in FIG. 7, the first end 5401 of the limit sleeve 540 near the sliding hole 43 has a size larger than the sliding hole 43 and smaller than the limit end hole 44, so as to be engaged in the limit end hole 44 for limitation; the second end 5402 of the limit sleeve 540 away from the sliding hole 43 has a size larger than the limit end hole 44 to prevent the limit sleeve 540 from passing through the limit end hole 44 and leave away from the connecting base 4, thus losing the limiting function. Additionally, the first end 5351 of the second latch pin 535 may be provided with a second latch cap 541, which has a larger diameter than the second latch pin 535 for easier operation by hand. A gap 542 is provided between the second latch cap 541 and the screw sleeve 538 to allow the limit sleeve 540 to move away from the limit end hole 44.

In this alternative embodiment, when the second latch pin 535 is located in any one of the limit end holes 44 of the connecting base 4, as shown in FIG. 7, the first end 5401 of the limit sleeve 540 is embedded in the limit end hole 44, and the second latch pin 535 is limited. At this time, the connecting rod assembly 5 may be in a fully unfolded state or a fully folded state. When it is need to rotate the connecting rod assembly 5, simply to press down the second latch cap 541 or the second latch pin 535, and thus the second spring 539 is compressed, and the limit sleeve 540 moves downward away from the limit end hole 44, allowing the second latch pin 535 to rotate into the sliding hole 43 and slide therein. When the second latch pin 535 moves from the sliding hole 43 to the limit end hole 44 again, the second spring 533 drives the first end 5401 of the limit sleeve 540 to move upward under the restoring force and enables it to engage in the limit end hole 44 for limitation.

To ensure maximum folding, as shown in FIG. 4, in the folded state, the second connecting rod 52, the first connecting rod 51, and the bottom supporting rod 1 are sequentially abutted from inside out, so that the connecting base 4 is also abutted against the bottom supporting rod 1, and the hinge point of the first connecting rod 51 with the connecting base 4 is closer to the bottom supporting rod 1 than the hinge point of the second connecting rod 52 with the connecting base 4. As shown in FIG. 2, in the unfolded state, only the end of the first connecting rod 51 vertically coincides with the connecting base 4, and part of the second connecting rod 52 coincides with the connecting base 4 in vertical direction. Setting the elastic latch mechanism 53 on the second connecting rod 52 can ensure the locking function while ensuring maximum folding.

In one embodiment, a synchronous gear 54 is mounted at one end of each second connecting rod 52 connected to the connecting base 4, and the synchronous gears 54 of the two second connecting rods 52 mesh with each other to make the connecting rod assemblies 5 swing synchronously; when one connecting rod assembly 5 is unfolded to a state perpendicular to the bottom supporting rod 1, the other connecting rod assembly 5 is also unfolded to a state perpendicular to the bottom supporting rod 1 through the transmission of the gears 54, so that the barbell stand can be quickly and fully unfolded, increasing convenience in use. Additionally, when the elastic latch mechanism 53 provided for one connecting rod assembly 5 is locked, the other connecting rod assembly 5 is also locked through the transmission of the gears 54, so that the barbell stand can be fixed in the unfolded state by providing only one elastic latch mechanism 53 to lock the two connecting rod assemblies 5, reducing the number of elastic latch mechanism 53 and lowering the manufacturing cost.

The connecting base 4 has a limit post 42 configured to abut against a side surface of the connecting rod when the connecting rod swings forward to be perpendicular to the bottom supporting rod 1. The limit post 42 prevents the connecting rod from further swinging forward, limiting the barbell stand in the fully unfolded state and avoiding insufficient unfolding of the barbell stand due to excessive swinging of the connecting rod assembly 5. Specifically, as shown in FIG. 2, vertically arranged limit post(s) 42 is/are provided between the first connecting rod 51 and the second connecting rod 52 of each connecting rod assembly 5; the limit post(s) 42 is/are closer to the second connecting rod 52 than to the first connecting rod 51, used to limit the excessive rotation of the second connecting rod 52.

In one embodiment, as shown in FIG. 1, the column support 2 includes a column 21, an adjustment column 22, and a stop pin 23. The bottom of the column 21 is fixedly connected to the bottom supporting rod 1, and the top is provided with a limit hole 24. The adjustment column 22 is inserted into the column 21 to slide up and down in the assembly hole of the column 21, realizing the vertical movement of the adjustment column 22; in another words, the column 21 and the adjustment column 22 can be slidably sleeved to adjust the height of the adjustment column 22. The barbell bracket 3 is mounted at the top of the adjustment column 22, and multiple adjustment holes 25 are spaced along the adjustment column 22. The stop pin 23 can be transversely inserted through the limit hole 24 and the adjustment hole 25 to limit the vertical movement of the adjustment column 22, fixing the top of the adjustment column 22 at a corresponding height position, realizing the height adjustment of the barbell bracket and allowing the barbell to be fixed at a required height position, ensuring flexibility in use. Additionally, when it is need to fold and store the barbell stand, the adjustment column 22 can be limited at its lowest possible height position, reducing the length of the column support 2, minimizing height space occupation, and improving storage convenience.

The above-described embodiments are only preferred implementations of the present application and do not limit the scope of the present application. Without departing from the design spirit of the present application, various modifications and improvements made by those of ordinary skill in the art to the technical solutions of the present application shall fall within the protection scope defined by the claims of the present application.

## Claims

1. A collapsible barbell stand, comprising:
two bottom supporting rods, which are arranged in parallel;
two column supports, which are respectively mounted on the two bottom supporting rods;
two barbell brackets, which are respectively mounted at the tops of the two column supports;
a connecting base, which is located between the two bottom supporting rods, wherein two sides of the connecting base are connected to the two bottom supporting rods by means of two connecting rod assemblies, such that the connecting base and the bottom supporting rods form a parallelogram connecting rod mechanism by means of the connecting rod assemblies.

2. The collapsible barbell stand according to claim 1, wherein each connecting rod assembly comprises two parallel connecting rods, namely a first connecting rod and a second connecting rod; each end of each connecting rod is hinged to the bottom supporting rod and the connecting base respectively.

3. The collapsible barbell stand according to claim 2, wherein the collapsible barbell stand is configured such that when the first connecting rod is parallel to and abuts against the inner surface of the bottom supporting rod, the second connecting rod abuts against the surface of the first connecting rod.

4. The collapsible barbell stand according to claim 3, wherein the first connecting rod and the second connecting rod are respectively hinged to a first mounting seat and a second mounting seat provided on the inner surface of the bottom supporting rod; the second mounting seat protrudes inward more than the first mounting seat; in the folded state, the collapsible barbell stand is configured such that the second connecting rod, the first connecting rod, and the bottom supporting rod are sequentially abutted from inside out, and the connecting base also abuts against the bottom supporting rod.

5. The collapsible barbell stand according to claim 3, wherein the collapsible barbell stand is configured such that when the first connecting rod is parallel to the bottom supporting rod, the surface of the second connecting rod on the side away from the first connecting rod abuts against the surface of the second connecting rod of another connecting rod assembly.

6. The collapsible barbell stand according to any one of claims 2-5, wherein the connecting rod assembly is connected to the rear portion of the bottom supporting rod.

7. The collapsible barbell stand according to any one of claims 2-5, wherein the connecting rod assembly further comprises a latch mechanism insertable between the connecting rod and the connecting base to limit the connecting rod assembly.

8. The collapsible barbell stand according to claim 7, wherein the latch mechanism is an elastic latch mechanism, and is selected from the following two solutions:
solution 1: the elastic latch mechanism has a first latch pin and a first sleeve; the first sleeve is mounted on the connecting rod; the first latch pin is slidably located within the first sleeve; a first end of the first latch pin extends out of the first sleeve for being operated by hand; a second end of the first latch pin, opposite to the first end, extends out of the first sleeve and can be inserted into a socket of the connecting base; a first spring is sleeved on the first latch pin and located within the first sleeve; the diameter of the opening of the first sleeve near the first end of the first latch pin is smaller than the diameter of the first spring; a first boss is provided at the second end of the first latch pin, and the first spring is confined between the opening of the first sleeve and the first boss;
solution 2: the connecting base has an arc-shaped sliding hole with limit end holes at both ends; the elastic latch mechanism has a second latch pin and a second sleeve; the second sleeve is mounted on the connecting rod; the second latch pin is slidably located within the second sleeve; a first end of the second latch pin extends out of the second sleeve for being operated by hand; a second end of the second latch pin, opposite to the first end, extends out of the second sleeve through an opening of the second sleeve and can be inserted into the sliding hole of the connecting base; the movement direction of the second latch pin is consistent with the extension direction of the arc-shaped sliding hole; a second boss is provided between the first end and the second end of the second latch pin and located within the second sleeve; a second spring is sleeved on the second latch pin and provided between the second boss and the opening of the second sleeve; a limit sleeve is provided at the second end of the second latch pin to limit the second latch pin at each limit end hole; the limit sleeve and the second sleeve are respectively located on opposite sides of the sliding hole.

9. The collapsible barbell stand according to any one of claims 2-5, wherein a synchronous gear is mounted at the end of each second connecting rod that is connected to the connecting base, and the synchronous gears of the two second connecting rods mesh with each other to make the connecting rods of the two connecting rod assemblies simultaneously perpendicular to the corresponding bottom supporting rods.

10. The collapsible barbell stand according to any one of claims 2-5, wherein the connecting base has a limit post configured to abut against a side surface of the connecting rod when the connecting rod swings to be perpendicular to the bottom supporting rod, thereby preventing the connecting rod from further swinging.

11. The collapsible barbell stand according to any one of claims 1-5, wherein the column support comprises:
a column with a bottom fixedly connected to the bottom supporting rod and a top provided with a limit hole;
an adjustment column inserted into the column to be movable up and down; the barbell bracket is mounted at the top of the adjustment column, and multiple adjustment holes are spaced along the adjustment column;
a stop pin that can pass through the limit hole and the adjustment hole to fix the adjustment column.
